# EUROPEAN PATENT APPLICATION

(11) **EP 1 519 083 A1**
(43) Date of publication of application: **30.03.2005**
(21) Application number: 04292320.1
(22) Date of filing: 29.09.2004
(51) Int. Cl.: F16H 61/24, F16H 61/28, F16H 59/10

(54) **Operating position select device for automatic transmission**

(30) Priority: 29.09.2003 JP 2003337252
(71) Applicant: Calsonic Kansei Corporation, Tokyo 164-8602 (JP)
(72) Inventor: Hirota, Yukitsugu c/o Calsonic Kansei Co, Nakano-ku Tokyo 164-8602 (JP); Otsuka, Takashi c/o Calsonic Kansei Co, Nakano-ku Tokyo 164-8602 (JP)
(74) Representative: Intès, Didier Gérard André

(57) **Abstract**

An operating position select device (100) for an automatic transmission(19) has a select lever unit (1) having a select lever (2), a mode shift unit (300) mounted on the transmission (19) to shift operation modes of the automatic transmission (19), a first and second control cables (8, 18) and others for mechanically connecting the select lever (2) and the mode shift unit (300), and an assist actuator (9) for outputting assist torque to shift the mode shift unit (300). An operating angle sensor (51) detects an operating angle of the select lever (2) and an assist angle sensor (200) detects an assist angle of the assist actuator (9). A control unit (22) computes a non-coupling amount of the control cables (8, 18) and others to determine a compensation amount and controls drive current supplied to the assist actuator (9) based on the operating angle, the assist angle, and the compensation amount.

## Description

The present invention relates to an operating position select device for an automatic transmission by which a driver can select by operating a select lever one of select mode positions corresponding to a plurality of operation modes of the automatic transmission.

An operating position select device for an automatic transmission of this kind is disclosed in Japanese patent laying-open publication (Tokkaihei) No. 9-323559. This select device includes a select lever unit disposed near a driver's seat in a passenger compartment and a mode shift unit mounted on an automatic transmission. The select lever unit has a select lever manually operated by a driver and is connected with the mode shift unit by a connecting mechanism, such as a control cable, or a connecting linkage, which transmits an operating force applied on the select lever by the driver to the mode shift unit to shift operation modes of the automatic transmission.

The conventional art, however, has a problem that the select lever unit needs a long select lever in order to operate it without a large operating force of the driver, which reduces design freedom concerning to an installation location of the select lever unit and/or a layout of a passenger compartment.

This reason comes from that a length of the select lever is determined so that a driver can easily operate the select lever and its operating torque must overcome frictional resistance of the connecting mechanism and the like. Namely, the operating torque, generated by the operating force on the select lever, has to be larger than torque caused by the sum of the frictional resistance in the connecting mechanism and resistance generated when a detent pin, which moves with the select lever, gets over a cam top portion of a detent plate during select operation, although the operating force of the driver is limited to a certain extent. Accordingly, to satisfy both of the above requirements the select lever needs to be longer than a certain length, typically to be 350 mm.

Another operating position select device for an automatic transmission of this kind is disclosed in Japanese patent laying-open publication (Tokkai) No. 2003-97694. This select device is, what is called, a shift-by-wire type one. It has a select lever manually operated by a driver, a select position detector for detecting a position of the select lever, a mode shift unit mounted on an automatic transmission for shifting its operation modes, an electric motor for driving a mode shift unit, and a control unit for controlling the electric motor based on an output signal from the detector.

This select device is suitable for shortening a length of the select lever and expanding design freedom for its installation location and/or layout of a passenger compartment, while the select device lacks a mechanical connection between the select lever and the mode shift unit. This lack of the mechanical connection results in that the mode shift unit can not be sifted despite of operating the select lever in case of electrical failure such that an electric wire is broken, or the select position detector or the control unit fails.

It is, therefore, an object of the present invention to provide an operating position select device for an automatic transmission which overcomes the foregoing drawbacks and can expand design freedom concerning to layout of a passenger compartment and/or an installation location of a select lever unit and drive a mode shift unit despite of electric failure of the operating position select device.

According to the first aspect of the present invention there is provided an operating position select device for an automatic transmission comprising: a select lever unit having a select lever operated by a driver; an operating position sensor which detects an operating position of the select lever and outputs an operating position signal; a mode shift unit mounted on the automatic transmission to shift operation modes of the automatic transmission; a mechanically connecting means which mechanically connects the select lever and the mode shift unit with each other; an assist actuator which is arranged between said select lever and said mode shift unit and outputs assist torque to an intermediate portion of said mechanically connecting means to shift the mode shift unit; an assist position sensor which detects an assist position of the assist actuator and outputs an assist position signal; and a control unit which computes a non-coupling amount of the mechanically connecting means to determine a compensation amount and generate a compensation signal concerning the compensation amount and controls drive current supplied to the assist actuator based on the operating position signal, the assist position signal, and the compensation signal.

Preferably, the compensation amount is set to be smaller than the non-coupling amount.

Preferably, the compensation amount is set to be substantially a half of the non-coupling amount.

Preferably, the non-coupling amount includes non-coupling amounts both in a first select direction of the select lever and in a second select direction opposite to the first select direction.

Preferably, the non-coupling amount is detected when the select lever is held in one of select mode positions corresponding to the operation modes of the automatic transmission.

The objects, features and advantages of the present invention will become apparent as the description proceeds when taken in conjunction with the accompanying drawings, in which:
FIG 1 is a schematic diagram showing a construction of an automatic transmission with an operating position select device of a preferred embodiment according to the present invention;
FIG 2 is an enlarged perspective view showing an assist actuator used in the operating position select device shown in FIG 1;
FIG 3 is an enlarged perspective view showing a mode shift unit with a detent mechanism used in the operating position select device shown in FIG 1;
FIG 4 is a control bock diagram of a control unit and its peripheral equipment used in the operating position select device shown in FIG 1;
FIG 5 is a flowchart of an assist process executed in the control unit for controlling an assist actuator during a select operation when a select lever is operated;
FIG. 6 is a schematic diagram showing relationships of an operating angle signal, a profile of a detent plate, and motor drive current with respect to a travel amount during the select lever is operated from P position to R position;
FIG 7 is a flowchart of a compensation process executed in the control unit for compensating the motor drive current to be supplied to the assist actuator in consideration of a non-coupling amount of a control cables and others between the select lever and a mode shift unit;
FIG 8 is a schematic diagram showing a state of a mechanically connecting mechanism disposed between an operating angle sensor and an assist angle sensor when the select lever is held in one of select mode positions; and
FIG 9 is a schematic diagram showing a state of the mechanically connecting mechanism when the select lever is moved in a first select direction, and then held in one of the select mode positions, and then moved in a second select direction.

Throughout the following detailed description, similar reference characters and numbers refer to similar elements in all figures of the drawings, and their descriptions are omitted for eliminating duplication.

An automatic transmission with an operating position select device of a first preferred embodiment according to the present invention will be described with reference to the accompanying drawings.

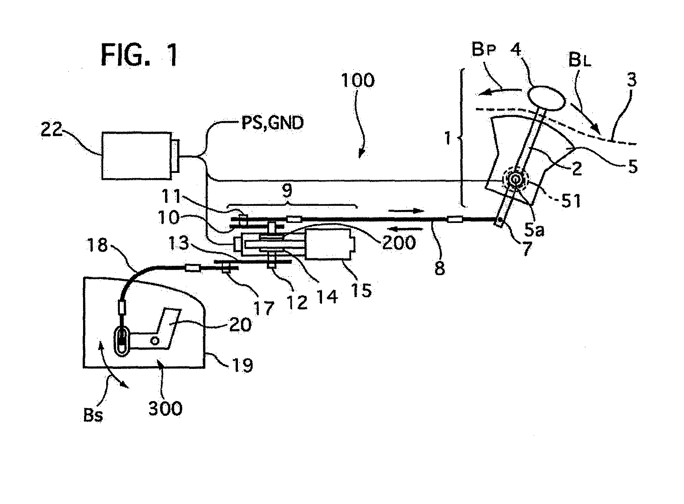

Referring to FIG 1 of the drawing, there is shown an automatic transmission 19, which is a conventional multi-speed one with a plurality of planetary gear sets, not shown, and operated among a plurality of operation modes, for example, a parking mode, a reverse drive mode, a neutral mode, a forward drive mode, and a forward low geared drive mode.

The automatic transmission 19 is provided with an operating position select device 100, which shifts the operation modes to a desirable mode by a manually select operation of a select lever 2 of the select device 100.

The operating position select device 100 includes a select lever unit 1 manually operated by a driver, an operating angle sensor 51 for detecting an operating angle of the select lever 2, an mode shift unit 300 mounted on the automatic transmission 19, a first and second control cables 8 and 18 connecting the select lever 2 and the mode shift unit 300 with each other, an assist actuator 9 for assisting operating force inputted to the select lever unit 1, an assist angle sensor 200 for detecting an assist angle, and a control unit 22 for controlling the assist actuator 9.

The operating angle sensor 51 corresponds to an operating position sensor of the present invention, and the assist angle sensor 200 corresponds to an assist position sensor of the present invention. The operating angle corresponds to an operating position of the present invention, and the assist angle corresponds to an assist position of the present invention.

The control unit 22 is electrically connected to a power supply PS and ground GND. The operating angle sensor 51 and the assist angle sensor 200 are electrically connected to the control unit 22.

The select lever unit 1 is arranged, for example, at a center console 3 beside a driver's seat and has the select lever 2, a bracket 5 fixed to a vehicle body, a supporting shaft 5a fixed on the bracket 5 to swingably support the select lever 2, a knob 4 mounted on the top of the select lever 2, and a checking mechanism, not shown, for ensuring the select lever 2 to be kept in a selected mode position.

The select lever 2 is set to about 100 mm in length in this embodiment, which is designed to be shorter by about 250 mm than a conventional type select lever. The lever 2 is operated by the driver swingably in a first direction toward P position as indicated by an arrow B_{P} and a second direction opposite to the P position and toward L position as indicated by an arrow B_{L}.

The select lever 2 can be positioned in one of select mode positions: the P position corresponding to the parking mode of the automatic transmission 19, an R position corresponding to the reverse drive mode, an N position corresponding to the neutral mode, a D position corresponding to the forward drive mode, and the L position corresponding to the forward low geared drive mode.

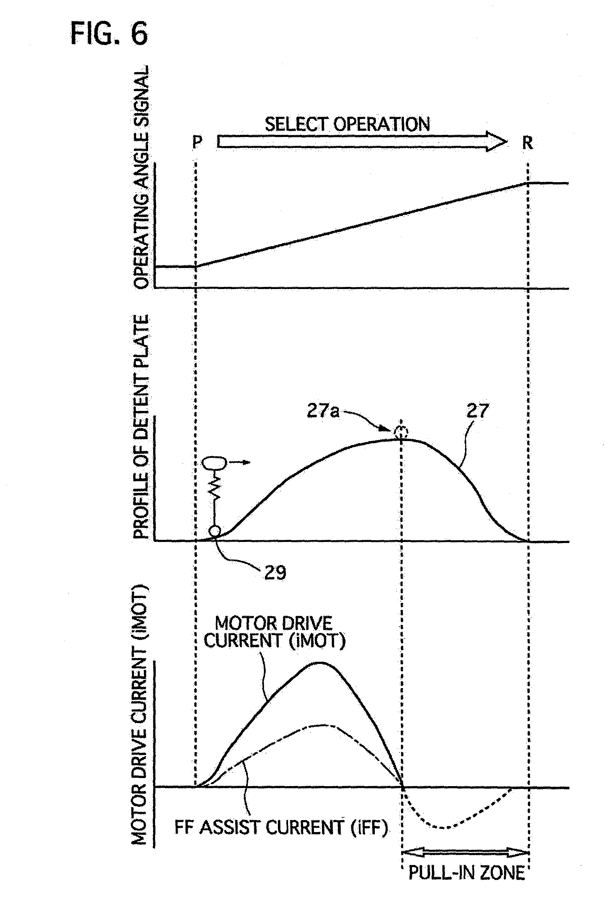

The operating angle sensor 51 is electrically connected to the control unit 22 and detects an operating angle of the select lever 2 to output an operating angle signal to the control unit 22. FIG. 6 shows a relationship between the operating angle of the select lever 2 and sensing current outputted from the operating angle sensor 51 as the operating angle signal. The sensing current outputted from the operating angle sensor 51 is proportional to the operating angle, both of which increase when the select lever 2 moves toward the R position. The operating angle signal corresponds to an operating position signal of the present invention.

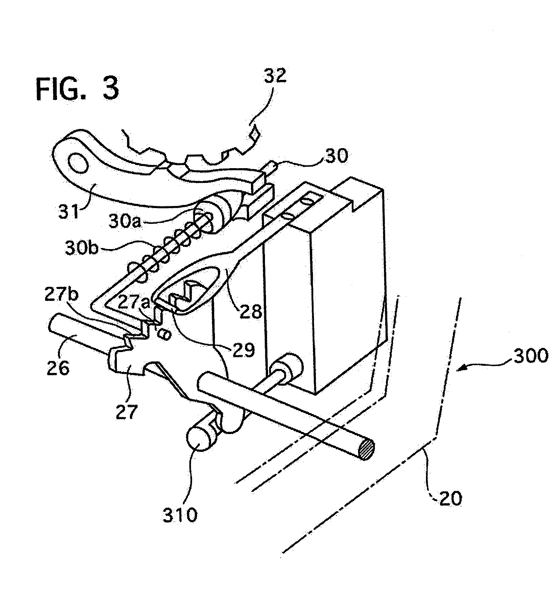

The mode shift unit 300 shifts the operation modes of the automatic transmission 19 according to a movement of the select lever 2 through the first and second control cables 8 and 18. Referring to FIGS. 1 and 3 of the drawings, the mode shift unit 300 has a manual plate lever 20 and a detent mechanism for keeping the manual plate lever 20 in a selected one of the select mode positions. The manual plate lever 20 is fixed on its intermediate portion with a rotary shaft 26 to be rotatable together with the shaft 26. The second control cable 18 is connected with one end portion of the manual plate lever 20 to control a rotation angle of the manual plate lever 20. The rotary shaft 26 is fixed with a detent plate 27 of the detent mechanism. The detent plate 27 is connected with a valve spool 310 of a manual valve disposed in a control valve unit of the automatic transmission 19 so as to move the spool 300 to shift the manual valve.

The detent plate 27 has a cam that is formed on its upper peripheral portions with top portions 27a and bottom portions 27b. The bottoms of the bottom portions 27b are arranged between the adjacent top portions 27a respectively. Positions of the bottom portions 27b correspond respectively to the five operation modes of the automatic transmission 19.

The cam is pressed by a detent pin 29 urged by a spring plate 28. One end portion of the spring plate 28 is mounted on the control valve unit and the other end portion supports the detent pin 29. The detent pin 29 is formed at a tip of the spring plate 28 to be pressed onto the cam of the detent plate 27 to be positioned in one of the bottom portions 27b so as to detain the valve spool 310 of the manual valve in a selected mode position. The detent plate 27 that is formed with the top and bottom portions 27a and 27b, the detent pin 29, and the spring plate 28 correspond to a detent mechanism of the present invention.

The detent plate 27 is coupled at its cam side portion with a parking rod 30 having a wedge 30a biased by a coil spring 30b. The wedge 30a can move along the rod 30 and press a parking pawl 31 by spring force of the coil spring 30b to engage the pawl 31 with a parking wheel 32 united to an output shaft of the automatic transmission 19 when the select lever 2 is shifted to the P position. This engagement of the pawl 31 and the wheel 32 results in locking drive wheels of a vehicle for parking.

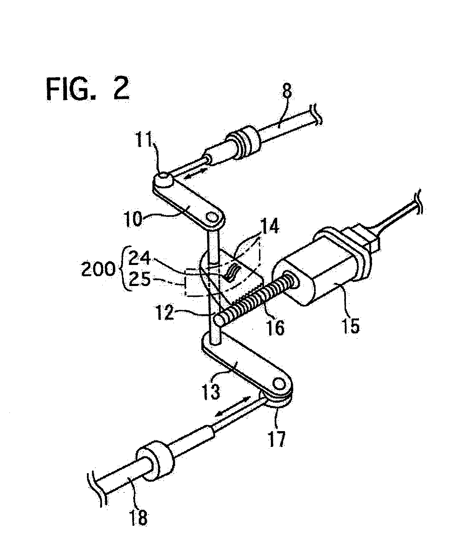

The detent plate 27 and the select lever 2 are, as shown in FIG 1, mechanically connected with the first and second control cables 8 and 18, and others. As shown in FIGS. 1 and 2, the first control cable 8 connects at its one end portion with a bottom portion of the select lever 2 through a first joint 7 and at the other end portion with one end portion of an input lever 10 through a second joint 11. The other end portion of the input lever 10 is connected with a top portion of a coupling shaft 12, whose bottom portion is connected with one end portion of an output lever 13. The other end portion of the output lever 13 is connected with one end portion of the second control cable 18 through a third joint 17. The other end portion of the second control cable 18 is, as shown in FIGS. 1 and 3, connected with the manual plate lever 20.

The first and second control cables 8 and 18, the first to third joints 7, 11, and 17, the input and output plates 10 and 13, and the coupling shaft 12 correspond to a mechanically connecting means of the present invention.

The assist actuator 9, as shown in FIG. 1 and especially in FIG. 2, includes an electric motor 15 with reduction gears to reduce rotation speed of an output shaft of the motor 15, a worm 16 that is formed on the output shaft, and a worm wheel 14 that is in mesh with the worm 16 and united to the coupling shaft 12.

The worm wheel 14 is provided on its upper surface with an electric terminal 24 contacted to a carbon resistor 25 indicated by a dashed line in FIG. 2. The carbon resistor 25 is printed on a substrate fixed to a case of the assist actuator 9. The electric terminal 24 and the carbon resistor 25 constitute the assist angle sensor 200, which is electrically connected to the control unit 22. The electric terminal 24 is movable together with and around the coupling shaft 12 by moving the select lever 2 to change its position with respect to the carbon resistor 25 and output an assisting angle signal to the control unit 22.

FIG 6 shows a relationship between the assist angle of the coupling shaft 12 and sensing current outputted from the assist angle sensor 200 as the assist angle signal. The sensing current outputted from the assist angle sensor 200 is proportional to the assist angle, both of which increase when the select lever 2 moves toward the R position. The assist angle sensor 200 corresponds to an assist position sensor of the present invention, and the assist angle signal corresponds to an assist position signal of the present invention.

The assist angle sensor 200 and the motor 15 are electrically connected to the control unit 22.

The control unit 22 receives the operating angle signal outputted from the operating angle sensor 51 and the assist angle signal outputted from the assist angle sensor 200 to compute target assist current based on these signals, and drives the electric motor 15 under pulse width modulation (PWM) control based on the target assist current.

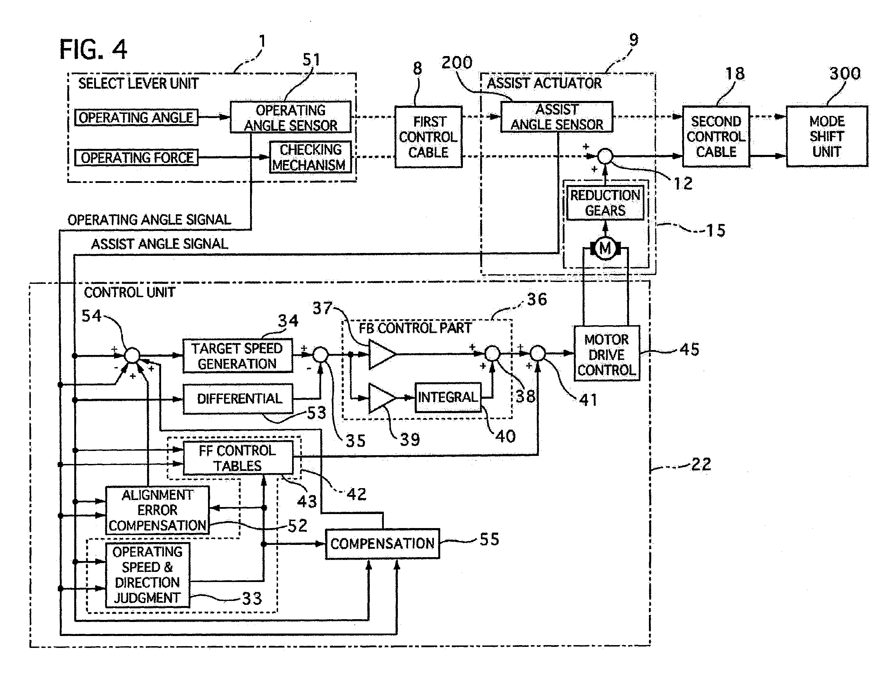

FIG 4 shows a control block diagram of the control unit 22 and its related units. A select operation by a driver causes that operating force of the driver inputs the select lever 2 to change its operating angle. The operating force is transmitted to the first control cable 8 and the checking mechanism. The operating angle is detected by the operating angle sensor 51, which outputs an operating angle signal to the control unit 22.

The first control cable 18 rotates the worm wheel 14 united with the coupling shaft 12 to move the terminal 24 with respect to the carbon resistance 25. This relative angle between the terminal 24 and the resistance 25 is detected by the assist angle sensor 200 as an assist angle, and the sensor 200 outputs an assist angle signal to the control unit 22.

Note that not only the operating torque from the select lever 2 inputted by the driver but also assist torque from the assist motor 15 is applied to the coupling shaft 12 to cause the assist angle.

The coupling shaft 12 drives the second control cable 18 to shift the mode sift unit 300 of the automatic transmission 19.

An operating speed and direction judgment part 33 computes the operating angle of the select lever 2 based on the operating angle signal outputted from the operating angle sensor 51 and the assist angle signal outputted from the assist angle sensor 200. Then, the operating speed and direction judgment part 33 computes an operating speed and judges an operating direction of the select lever 2 by calculating differential of the operating angles, and then outputs an operating speed signal and an operating direction signal to an alignment error compensation part 52 and a feedforward (FF) control table part 42.

The alignment error compensation part 52 computes an alignment error and outputs a compensation signal to a first adder 54 to compensate the signals outputted from the operating angle sensor 51 and the assist angle sensor 200. The alignment error 1 is computed in a state such that it can be apparently confirmed where the select lever 2 is positioned, for example, in the P position.

The feedforward control table part 42 has a plurality of feedforward compensation tables which determine feedforward current based on the operating angle, the assist angle, the operating speed, and the operating direction to output a feedforward current signal to a fourth adder 41. The tables are prepared according to the respective operating directions, the directions B_{P} and B_{L} of the select lever 2 shown in FIG 1, and their data are set so that the feedforward current becomes larger as the operating speed becomes higher.

The first adder 54 computes an angle difference between the operating angle and the assist angle in view of the alignment error based on the operating angle signal, the assist angle signal, and the compensation signal to output an angle difference signal to a target speed generation part 34.

The target speed generation part 34 receives the angle difference signal and computes a target speed of the select lever 2 based on the angle difference to output a target speed signal to a second adder 35.

A differential element 53 receives the assist angle signal outputted from the assist angle sensor 200 to obtain an assist speed by calculating differential of the assist angles and outputs an assist speed signal to a second adder 35.

The second adder 35 receives the assist speed signal and computes a speed difference between the assist speed obtained by the differential part 53 and the target speed obtained by the target speed generation part 34 to output a speed difference signal to a feedback (FB) control part 36.

The feedback control part 36 includes a first multiplier 37, a third adder 38, a second multiplier 39 and an integral element 40. The first multiplier 37 computes a proportional current by multiplying the speed difference, obtained from the second adder 35, by a proportional gain and outputs a proportional current signal to the third adder 38. The second multiplier 39 computes a multiplied speed difference current by multiplying the speed difference obtained from the second adder 35 by integral gain and outputs a multiplied speed difference current signal to the integral element 40. The integral element 40 obtains integral current by calculating integration of the multiplied speed difference current and outputs an integral current signal to the third adder 38. The third adder 38 computes feedback current iFB by adding the integral current to the proportional current and outputs a feedback current signal to the fourth adder 41.

The fourth adder 41 computes motor drive current by adding the feedforward current signal to the feedback current signal and outputs a motor drive current signal to a motor drive control part 45.

The motor drive control part 45 outputs the motor drive current to the electric motor 15 under Power Width Modulation (PWM) control. In stead of the PMW control, the motor 15 may be driven under current control or armature voltage control.

A compensation part 55 detects a non-coupling amount when the select lever 2 is moved from a position where the select lever 2 is held in one of the select mode positions to determine a compensation amount and output a compensation signal concerning to the compensation amount to the first adder 54 based upon an operating angle signal, an assist angle signal, and an operating direction signal.

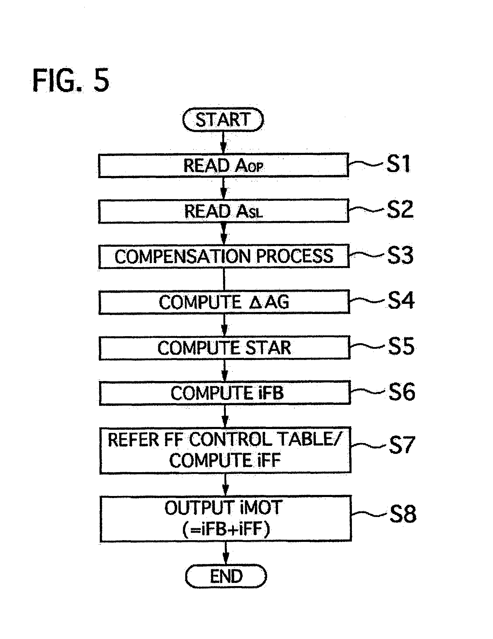

FIG. 5 shows a flowchart of an assist process executed in the control unit 22 to control the assist actuator 9 when the select lever 2 is operated.

At step S1, the control unit 22 receives an operating angle signal outputted from the operating angle sensor 51 to read an operating angle AOP of the select lever 2, and then the flow goes to step S2. At the step S2, the control unit 22 receives an assist angle signal outputted from the assist angle sensor 200 to read an assist angle ASL of the coupling shaft 12 assisted by the assist actuator 9, and then the flow goes to step S3.

At the step S3, the compensation part 55 determines a compensation amount based on the operating angle signal outputted from the operating angle sensor 51, the assist angle signal outputted from the assist angle sensor 200, and an operating direction signal outputted from the operating speed and direction judgment part 33 so as to output a compensation signal to the first adder 54, and then the flow goes to step S4. How to determine the compensation amount will be described in detail later.

At the step S4, the first adder 54 computes an angle difference ΔAG between the operating angle AOP and the assist angle ASL in consideration of the compensation amount, and then the flow goes to step S5.

At the step S5, the target generation part 34 determines targeted speed STAR of the select lever 2 based on the angle difference ΔAG, and then the flow goes to step S6.

At the step S6, the feedback control part 36 computes the feedback current iFB, and then the flow goes to step S7.

At the step S7, the FF control table part 43 shifts the feedforward compensation tables so as to select and refer an optimum table according to the operating direction of the select lever 2 and the operating angle. Then, the FF control table part 43 computes feedforward current iFF by using the selected optimum FF control table, and then the flow goes to step S8.

At the step S8, the fourth adder 38 computes motor drive current iMOT by adding the compensated feedforward current iCOM to the feedback current iFB so as to output the motor drive current iMOT to the motor drive control part 45. This output the motor drive current iMOT brings the electric motor 15b to run to assist the select operation of the select lever 2.

FIG. 6 shows relationships of an operating angle current signal, a profile of the detent plate 27, and motor drive current with respect to a travel amount, corresponding to the operating angle, when the select lever 2 is shifted from the P position to the R position.

In this operation, as shown in the upper part of FIG 6, the operating angle signal outputted from the operating angle sensor 51 increases proportionally as the operating angle of the select lever 2 increases. As the operating angle increases, the detent pin 29, as shown in the intermediate part of FIG 6, ascends from the bottom portion 27b of the detent plate 27 to the top portion 27a, which causes resistance force against the operating force applied on the select lever 2 by a driver to become larger at first and then descends. This change of the resistance force demands the motor drive current iMOT to rise at first stage and then descend according to the resistance force.

The motor drive current iMOT is shown in the lower part of FIG. 6 and includes FF assist current iFF which is indicated by a dashed line. In this embodiment, the FF assist current iFF is set to about a half value of the motor drive current iMOT, so that assist torque obtained by the current iFF corresponds to reaction torque caused at the detent mechanism.

After the detent pin 29 gets over the top portion 27a by further movement of the select lever 2, the detent pin 29 comes in the pull-in zone. In this zone, the detent pin 29 is biased by the spring plate 28 to move into the bottom portion 27b corresponding to the R position, where the assist control is stopped.

In the above select operation, the select lever 2 is assisted to move in the operating direction by the electric motor 15 driven by the FB assist current iFB and the FF assist current iFF. This assist control of the motor 15 using the both assist currents iFB and iFF is superior to assist control using only one of the assist currents. This reason comes from following descriptions.

In assist control using only the FF assist current iFF, operating force to move the select lever 2 varies depending on operating speed of the select lever 2 and/or disturbance from the environment, which causes that the motor drive current does not meet an optimum assist requirement to be needed. For example, when a motor vehicle is parked at a slope way, the parking pole 30 and the parking wheel 32 are engaged with each other more tightly than when at a level road. In this case, the assist torque becomes too small when using only FF assist current iFF obtained by referring the FF compensation table despite that more strong assist torque is needed for select operation.

On the other hand, in assist control using only the feedback assist current iFB, a response of the assisting select operation is inferior to the assist control using the both assist current iFB and iFF, because reaction force Fm of the select lever 2 is much larger than target reaction force Ft of the select lever 2, for example, Fm : Ft = 10 : 1. Besides, proportional and integration (PI) FB control generally has difficulties in following a large torque variation with high precision.

On the contrary, the assist control of this embodiment can satisfy all of suitable assist torque, high response to large reaction force, and high robust stability, because the motor drive current iMOT includes both of the FB assist current IFB that is determined based on a speed difference between actual operating speed of the select lever 2 and target operating speed and the FF assist current iFF that is of a half value of electric current corresponding to the reaction torque of the detent mechanism.

In the select operation, the operation of the select lever 2 is immediately detected by the operating angle sensor 51, while the assist control movement is not detected immediately by the assist angle sensor 200 because of existence of play, loose, and/or deformation of the control cables 8 and 18 and the others. Accordingly, a target speed is computed based on an angle difference between the operating angle and the assist angle, and then a speed difference between the target speed and an assist speed of the assist actuator 9 is computed to determine the FB assist current and its assist direction. The FB assist current is set to be larger as at least one of the angle difference, the speed difference, and an acceleration difference between the select lever 2 and the coupling shaft 12 becomes larger. And the first stage of the assist operation, the FF assist current is added to the FB assist current to improve a response.

This assist operation by the assist actuator 9 enables the manual plate lever 20 to move synchronously with and follow the select lever 4, although the first control cable 8 is loosened, which results in reducing the operating force. This reduction of the operating force emphasizes detent feeling, caused by the detent mechanism, to the driver and provides a good operation feeling.

At step S101, the operating speed and direction judgment part 33 detects an operating direction of the select lever 2 operated by the driver based on the operating angle AOP obtained from the operating angle sensor 51 and the assist angle ASL obtained from the assist angle sensor 200. Then the judgment part 33 judges whether or not the select lever 2 is moved toward the L position, which is indicated by the arrow BL in FIG. 1. If YES, the flow goes to step S102, while, if No, the execution of this process is ended.

At the step S102, the compensation part 55 determines whether or not the assist angle ASL outputted from the assist angle sensor 200 is changed. If YES, the flow goes to step S103, while, if NO, the execution of this process is ended.

At the step S103, Xa is set to be zero and Xb is set to be zero, where Xa is an operating angle just before the assist angle ASL changes, and Xb is an assist angle just before the assist angle ASL changes, and then the flow goes to step S 104.

At the step S104, the assist control is carried out according to the flow shown in FIG. 5, and then the flow goes to step S105.

At the step S105, the compensation part 55 judges whether or not the select lever 2 is in a state of being held at one of the bottom portions 27b corresponding to the select mode positions of the automatic transmission, such as the R, P, N, D, and L positions. If YES, the flow goes to step S106, while, if NO, the execution of this process is ended.

At the step S106, the angle positions of the Xa' and Xb' are recorded in a memory of the control unit 22, where Xa' is an operating angle AOP when the select lever 2 is held in the select mode position, and Xb' is an assist angle ASL when the select lever 2 is held in the select mode position, and then the flow goes to step S 107.

At the step S107, the compensation part 55 judges based on the operating direction obtained from the operating speed and direction judgment part 33 whether or not the select lever 2 is moved toward the P position, which is indicated by the arrow BP in FIG. 1. If YES, the flow goes to step S108, while, if NO, the execution of this process is ended.

At the step S108, it is judged whether or not the assist angle ASL outputted from the assist angle sensor 200 is changed. If YES, the flow goes to step S109, while, if NO, the execution of this process is ended.

At the step S109, Xa" and Xb" are recorded in the memory, where Xa" is an operating angle just before the assist angle ASL changes, and Xb" is an assist angle just before the assist angle ASL changes, and then the flow goes to step S110.

At the step S 110, the sum ΔX" of a lost motion amount and a play amount is computed by a formula: ΔX" = Xb" - Xa", and then the flow goes to step S111.

At the step S111, it is judged whether or not the sum of the lost motion amount and the play amount. If YES, the flow goes to step S112, while, if No, the flow goes to step S 114.

At the step S 112, median M, M = ΔX"/2 = (Xb" - Xa")/2, of the sum ΔX" is calculated, and then the flow goes to step S113.

At the step S 113, the compensation part 55 outputs a compensation signal corresponding to the median M to the first adder 54 to compensate its output signal, and then the flow goes to the step S 114.

At the step S114, the assist control according to the flow shown in FIG. 5 is carried out in consideration of the above computed compensation.

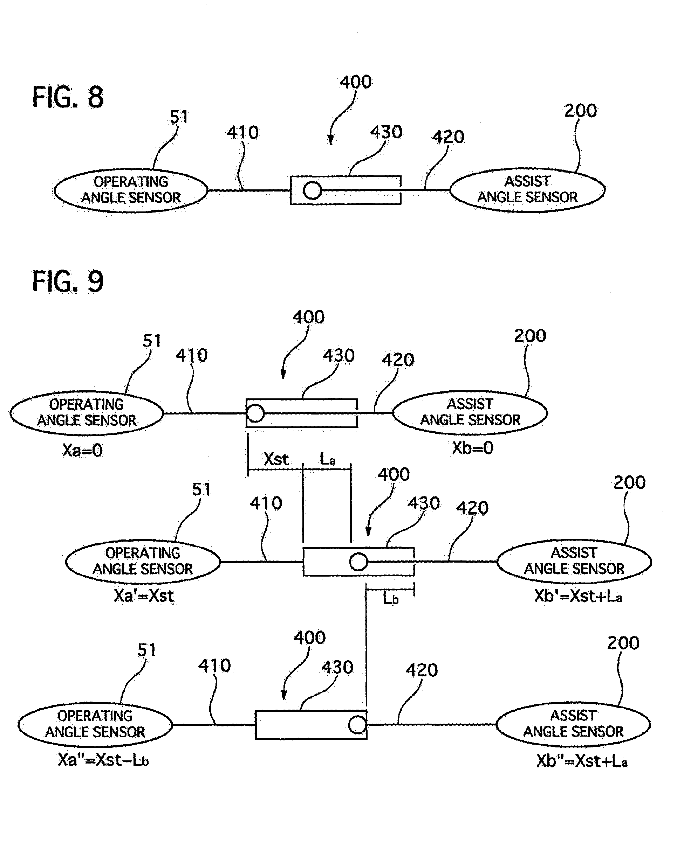

FIGS. 8 and 9 show a state of a mechanically connecting mechanism 400 when the select lever 2 is held in one of the select mode positions or moved from to another select mode position. The control cables 8 and the others, such as the fist and second joints 7 and 19, and the input lever 10, between the sensors 51 and 200 are schematically illustrated in FIGS. 8 and 9 as the mechanically connecting mechanism 400, which has a first transmitting member 410 connected with the select lever 2, a second transmitting member 420 connected with the coupling shaft 12, and a length changing part 430. The mechanically connecting mechanism 400 corresponds to a mechanically connecting means of the present invention.

When the select lever 2 is held in one of the select mode positions, the first and second transmitting members 410 and 420 and the length changing part 430 are positioned in a state shown in FIG 8. In this state, the length changing part 430 has a lost motion amount and/or a play amount in the both directions BP and BL, which allows the select lever 2 to be substantially free from restriction by the first and second transmitting members 410 and 420. The lost motion amount and/or the play amount correspond to a non-coupling amount of the present invention.

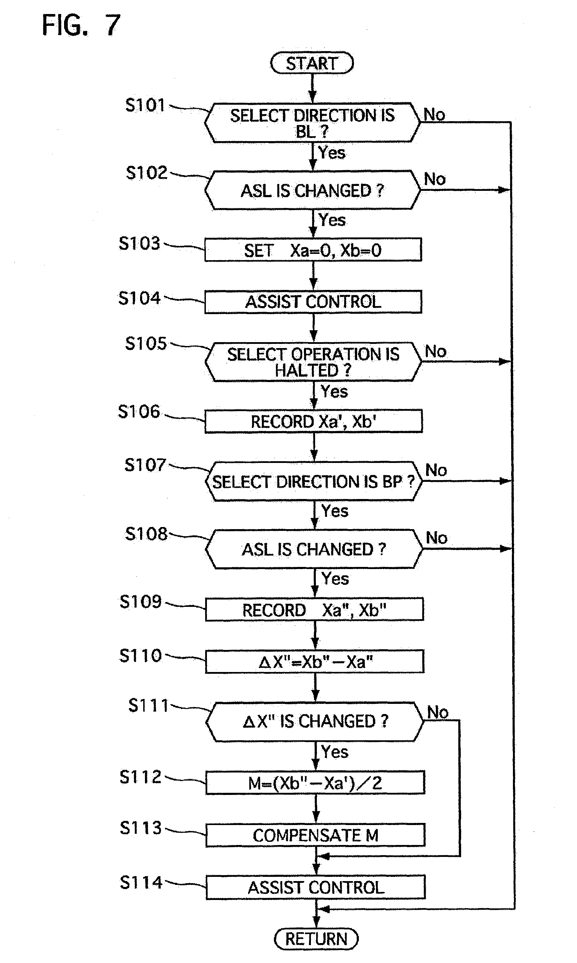

When the select lever 2 is moved from the position shown in FIG. 8 in one of the directions BL or BP, the operating speed and direction judgment 33 judges its operating direction, which corresponds to the step S101 in FIG. 7. Immediately after the operation of the select lever 2, an operating angle signal AOP outputted from the operating angle sensor 51 changes, while an assist angle signal ASL outputted from the assist angle sensor 200 does not change because of existence of the lost motion and/or the play at the length changing part 430. When the lost motion amount and the play amount become zero as shown in the upper part of FIG. 9 as a result of the first connecting member 410 being pushed toward the second connecting member 420 by the select lever 2, its operating force starts to be transmitted to the coupling shaft 12 and then to shift the mode shift unit 300, resulting in a change of the assist angle signal ASL outputted from the assist angle sensor 200. Just before this change of the assist angle signal ASL, the operating angle Xa and the assist angle Xb are set to be zero, which corresponds to the step 103 in FIG 7. After this mechanical engagement of the first and second transmitting members 410 and 420, resulting in no lost motion amount nor play amount between them, the assist motor 15 starts to assist the select operation of the select lever 2.

When the select operation is ended and the select lever 2 is held in the desired select mode position, the length changing part 430 of the mechanically connecting mechanism 400 has a lost motion amount and/or a play amount in the both directions B_{L} and B_{P} as shown in the intermediate part of FIG 9, which allows the select lever 2 to be substantially free from restriction by the first and second transmitting members 410 and 420. At this state, the operating angle Xa' obtained from the operating angle sensor 51 becomes Xst and the assist angle Xb' obtained from the assist angle sensor 200 becomes Xst + La, where Xst is an operating angle caused by the movement of the first transmitting member 410 without the lost motion or play, and La is a part of the lost motion amount and/or the play amount when the select lever 2 is held in the select mode position. In this held state, the length changing part 430 has lost motion amounts and/or play amounts of La in the first select direction BP and Lb in the second select direction BL. These calculations correspond to the step S 106 in FIG. 7.

When the select lever 2 is moved in the same direction as the last select operation, the compensation process is not executed.

On the contrary, when the select lever 2 is moved in the direction opposite to the last select direction after the select lever 2 is held in one of the select mode positions, an operating angle signal AOP outputted from the operating angle sensor 51 immediately begins to change, but an assist angle signal ASL outputted from the assist angle sensor 200 does not change at the first stage because of the lost motion and/or the play of the length changing part 430

In the first embodiment, the feedback control part 36 controls differences between the operating angle AOP and the select angle ASL and between the operating speed and the assisting speed to be smaller. Namely, the former difference is kept to be within a predetermined value that is set smaller than the sum of the play amount and/or the lost motion amount of the first and second control cables 8 and 18 and the others, for the play amount and/or the lost motion amount of them are limited.

When the operating position select unit 100 fails electrically because of a broken electric wire for example, the operating force of the select lever 2 is directly transmitted from the lever 2 to the mode shift unit 300 mechanically through the first and second control cables 8 and 18, the input and output levers 10 and 13 and the others, thereby enabling the mode shift unit 300 to shift the modes of the automatic transmission 19 although its operating force becomes larger than in a normal state.

This operating position select device 100 of the first embodiment has many advantages described below.

The select lever 2 can be shorter than a conventional one by about 150 mm at its portion projecting from a center console toward a passenger compartment without increasing operating force applied to the select lever 2 so much. This brings a design freedom concerning to an installation location of the select lever and/or a layout of a passenger compartment to be broadened.

When operating the select lever 2, assist torque from the electric motor 15 is applied to the coupling shaft 12 of the mechanically connecting mechanism 400 so as to reduce the operating force applied to the select lever 2. When the operating position select unit 100 fails electrically, a driver can shift the mode shift unit 300 by operating the select lever 2, because the select lever 2 and the mode shift unit 300 are mechanically connected by the mechanically connecting mechanism 400, such as the first and second control cables 8 and 18 and the others.

The motor 15 is driven by the motor drive current iMOT consisting of the FB assist current iFB and the FF assist current iFF, which enables the mode shift unit 300 to follow the movement of the select lever 2 to ensure certainly shifting the mode shift device 300 despite of the play and/or lost motion of the mechanically connecting mechanism 400.

The feedback control part 36 can reduce resistance force applied to the select lever 2, as it controls so that the angle difference between the operating angle and the assist angle becomes smaller than the sum of the play amount and/or the lost motion amount of the mechanically connecting mechanism 400.

The feedforward control part 42 can control the assist actuator 9 not so as to be delayed or anteceded with respect to the movement of the select lever 2, as it controls the angle difference between the operating angle and the assist angle to be kept within a predetermined value. In this feedforward control part 42, referring to the FF control tables so as to output the FF assist current cuts down calculating time for obtaining the FF assist current. Using the FF control tables that are different from each other according to the operating direction of the select lever 2 can reduce an assist amount difference in the operating directions caused by hysteresis of the mechanically connecting mechanism 400.

The assist actuator 9 can have high traceability after the movement of the select lever 2, because the FF assist current is controlled to increase as the operating speed or the operating acceleration increases.

The control unit 22 can avoid over-assisting such that the mode shift unit 300 moves beyond a target mode position or is assisted toward the direction opposite to the target mode position, as the motor drive current is reduced or becomes zero after the detent pin 29 gets over the top portion 27a of the detent plate 27, where the detent force changes from increase to reduce during the select operation of the select lever 2.

While there have been particularly shown and described with reference to preferred embodiments thereof, it will be understood that various modifications may be made therein, and it is intended to cover in the appended claims all such modifications as fall within the true spirit and scope of the invention.

For example, The mechanically connecting mechanism 400 may be rods or linkages instead of the first and second control cables 8 and 18 in the above embodiments. The select lever 2 may be of a shape different from the above embodiments.

The ratio of the feedforward current iFF to the feedback current iFB may be set arbitrarily according to a target operating characteristics: For example, the feedforward current iFF may be zero, so that the motor drive current iMOT may be only the feedback current iFB.

The assist control start judgment may be performed based on the operating speed of the select lever 2 and the assist speed of the assist actuator 9. These speeds are easily obtained by calculating differentials of the operating angle from the operating angle sensor 51 and the assist angle from the assist angle sensor 200.

The operating position can be detected by the displacement amount of the select lever 2 or the mechanically connecting mechanism 400 that connects the select lever 2 and the assist actuator 9 with each other instead of the operating angle of the shift lever 2.

The assist position may be detected by the displacement amount of the mechanically connecting mechanism 400 that connects the assist actuator 9 and the mode select unit 300 with each other, or the motor drive current supplied to the electric motor 15, or the rotational number of the electric motor 15.

Although the assist actuator 9 is controlled according to the angle difference between the operating angle of the select lever 2 and the assist angle of the coupling shaft 12 of the assist actuator 9 in the above embodiments, it may be controlled according to the speed difference or the acceleration difference between the operating position and the assist position.

## Claims

1. An operating position select device (100) for an automatic transmission (19) comprising:
a select lever unit (1) having a select lever (2) operated by a driver;
an operating position sensor (51) which detects an operating position of said select lever (2) and outputs an operating position signal;
a mode shift unit (300) mounted on the automatic transmission (19) to shift operation modes of the automatic transmission (19);
a mechanically connecting means (7, 8, 11, 18; 400, 410, 420, 430) which mechanically connects said select lever (2) and said mode shift unit (300) with each other;
an assist actuator (9) which is arranged between said select lever (2) and said mode shift unit (300) so as to output assist torque to an intermediate portion of said mechanically connecting means (7, 8, 11, 18; 400, 410, 420, 430) and shift the mode shift unit (300);
an assist position sensor (200) which detects an assist position of said assist actuator (9) and outputs an assist position signal; and
a control unit (22) which computes a non-coupling amount of said mechanically connecting means (7, 8, 11, 18; 400, 410, 420, 430) to determine a compensation amount and generate a compensation signal concerning the compensation amount and controls drive current supplied to said assist actuator (9) based on the operating position signal, the assist position signal, and the compensation signal.

2. An operating position select device (100) for an automatic transmission (19) as set forth in claim 1,
wherein the compensation amount is set to be smaller than the non-coupling amount.

3. An operating position select device (100) for an automatic transmission (19) as set forth in claim 2,
wherein the compensation amount is set to be substantially a half of the non-coupling amount.

4. An operating position select device (100) for an automatic transmission (19) as set forth in one of claims 1 and 2,
wherein the non-coupling amount includes non-coupling amounts in both a first select direction (BP) of said select lever (2) and in a second select direction (BL) opposite to the first select direction (BP).

5. An operating position select device (100) for an automatic transmission (19) as set forth in one of claims 1 to 4,
wherein the non-coupling amount is detected when said select lever (2) is held in one of select mode positions corresponding to the operation modes of the automatic transmission (19).
